# EUROPÄISCHE PATENTANMELDUNG

(11) **EP 1 953 729 A1**
(43) Veröffentlichungstag der Anmeldung: **06.08.2008**
(21) Anmeldenummer: 07101428.6
(22) Anmeldetag: 30.01.2007
(51) Int. Cl.: G09B 23/10, G01G 9/00

(54) **Verfahren zur berührungslosen Gewichtsermittlung und Vorrichtung zur Durchführung des Verfahrens**

(71) Anmelder: Stauffer, Rolf, 3053 Münchenbuchsee (CH)
(72) Erfinder: Stauffer, Rolf, 3053 Münchenbuchsee (CH)
(74) Vertreter: Scheuzger, Beat Otto

(57) **Zusammenfassung**

Die vorliegende Erfindung bezieht sich auf ein Verfahren zur berührungslosen Gewichtsermittlung, in welchem das Gewicht eines ersten Körpers (K1) im Verhältnis zum Gewicht eines zweiten Körpers (K2) so ermittelt wird, dass der erste Körper (K1) auf einen ersten Startpunkt (SP1) aufgestellt wird, dass der erste Körper (K1) ausgehend vom ersten Startpunkt (SP1) in Bewegung gesetzt und auf einem ersten Beschleunigungspfad (BP1) beschleunigt wird, wobei mindestens ein Teil der potentiellen Energie des ersten Körpers (K1) in kinetische Energie umgewandelt wird, und dass die Bewegung des ersten Körpers (K1) durch eine Wechselwirkung mit einem Wechselwirkungskörper (K2, MB) in einem Aktionsbereich (AB) beeinflusst wird, wobei das Gewicht des ersten Körpers (K1) im Verhältnis zum Gewicht des zweiten Körpers (K2) aufgrund der Bewegung des ersten Körpers (K1) nach der Wechselwirkung mit dem Wechselwirkungskörper (K2, MB) ermittelt wird. Ausserdem bezieht sich die vorliegende Erfindung auf eine Vorrichtung, welche zur Durchführung des erfindungsgemässen Verfahrens geeignet ist.

## Beschreibung

### Sachgebiet der Erfindung

Die Erfindung betrifft ein Verfahren zur berührungslosen Gewichtsermittlung, und eine Vorrichtung zur Durchführung dieses Verfahrens. Insbesondere betrifft diese Erfindung ein Verfahren zur berührungslosen Gewichtsermittlung, und eine Vorrichtung zur Durchführung des Verfahrens, in welchem das Gewicht eines ersten Körpers im Verhältnis zum Gewicht eines zweiten Körpers ermittelt wird.

### Stand der Technik

Es sind verschiedene Verfahren und Methoden zur Gewichtsermittlung zweier Körper, beziehungsweise zur Ermittlung des Gewichts von einem Körper im Verhältnis zum Gewicht eines anderen Körpers bekannt. Eine nahe liegende Methode besteht darin, die beiden Körper gemeinsam oder nacheinander in die Hand zu nehmen, und durch das Gefühl und die Erfahrungen das Gewicht von einem Körper im Verhältnis zum Gewicht des anderen Körpers zu bestimmen. Auch können die beiden Körper je in eine andere Hand genommen werden, und dann das Gewicht von einem Körper ebenfalls nach dem Gefühl im Verhältnis zum anderen Körper bestimmt werden. Selbstverständlich sind diese beiden Methoden jedoch relativ unpräzise, und sie hängen darüber hinaus entscheidend vom subjektiven Gefühl des Benutzers ab. Ausserdem gibt es Menschen, die beispielsweise aufgrund von Verletzungen oder sonstigen Behinderungen nicht oder kaum in der Lage sind, das Verhältnis zwischen den Gewichten der beiden Körper auf diese Weise zu bestimmen. Schliesslich ist es durchaus möglich, dass sich die Gewichte der beiden Körper nur um einen sehr kleinen Wert unterscheiden, so dass diese Methode hier schnell an ihre Grenzen stösst.

Nach einer anderen bekannten und ebenfalls nahe liegenden Methode wird zur Ermittlung des Gewichts eines Körpers im Verhältnis zu einem anderen Körper ein Hebel verwendet. Ein Hebel ist ein einfaches mechanisches Kraftübertragungssystem, welches in der Regel aus einem um eine Achse drehbaren, meist starren, stabförmigen Körper besteht. Entsprechend dem Hebelgesetz der Physik herrscht an einem Hebel ein Gleichgewicht, wenn die Summe der Drehmomente aller an ihm angreifenden Kräfte Null ist. Zur Ermittlung des Gewichts zweier Körper im Verhältnis zueinander mittels eines Hebels werden diese zwei Körper auf die unterschiedlichen Seiten des Hebels, jedoch in der gleichen Entfernung vom Dreh- bzw. Unterstützungspunkt, aufgestellt. Aus der resultierenden Position des Hebels kann das Verhältnis zwischen den beiden Gewichten sehr einfach ermittelt werden.

Weiter kann zur Ermittlung des Gewichts eines Körpers im Verhältnis zu einem anderen Körper auch eine weitere bekannte Methode verwendet werden. Dabei werden beide Körper zuerst mittels einer geeigneten Waagevorrichtung gewogen und die ermittelten Gewichte (bzw. Massen) der beiden Körper anschliessend untereinander verglichen. Aus diesem Vergleich kann mittels einer einfachen mathematischen Methode das Gewichtsverhältnis der beiden Körper ermittelt werden.

Jedoch haben auch diese beiden Methoden einen entscheidenden Nachteil, nämlich, dass sie ausschliesslich funktionieren, wenn beide Körper während der Ermittlung des Gewichtsverhältnisses angefasst werden können. Wenn einer der beiden Körper aus irgendeinem Grund nicht berührt werden kann oder darf, stossen auch diese beiden Methoden schnell an ihre Grenzen. Ausserdem haben diese Methoden grundsätzlich stets einen einheitlichen Verlauf, in welchem keine Variationen vorkommen können. So spielt es beispielsweise in der Methode mit einer Waagevorrichtung grundsätzlich überhaupt keine Rolle, ob zunächst der erste Körper und dann der zweite Körper oder umgekehrt gewogen werden. Beim Hebelverfahren ist es in ähnlicher Weise nicht relevant, ob der erste Körper auf die linke Seite und der zweite Körper auf die rechte Seite des Hebels oder umgekehrt positioniert werden. So entsteht nach einer mehrmaligen Anwendung dieser beiden Verfahren eine Routine, die sich sehr schnell zu einer fehlenden Motivation wandelt. Dadurch steigt auch erheblich das Risiko, dass die Ermittlung des Gewichtsverhältnisses zweier Körper inkorrekt durchgeführt wird. Zudem können die beschriebenen Methoden aus denselben Gründen auch nur bedingt zu Lern- und Erziehungszwecken bei Kindern und Jugendlichen eingesetzt werden.

Es ist daher eine Aufgabe der vorliegenden Erfindung, ein neues Verfahren zur berührungslosen Gewichtsermittlung, und eine neue Vorrichtung zur Durchführung dieses Verfahrens vorzuschlagen, welche nicht die oben genannten Nachteile des Standes der Technik aufweisen. Insbesondere ist es eine Aufgabe der vorliegenden Erfindung, ein Verfahren zur berührungslosen Gewichtsermittlung, und eine Vorrichtung zur Durchführung dieses Verfahrens bereitzustellen, welche den Benutzern nicht nur die Möglichkeit geben, das Gewicht eines Körpers im Verhältnis zum Gewicht eines zweiten Körpers einfach und zuverlässig berührungslos zu ermitteln, sondern welche ausserdem auch auf eine variable Art und Weise durchgeführt werden können, so dass bei der Anwendung auch keine Monotonie und die damit verbundenen Fehler entstehen können. Es ist darüber hinaus auch eine Aufgabe der vorliegenden Erfindung, ein Verfahren zur berührungslosen Gewichtsermittlung, und die Vorrichtung zur Durchführung dieses Verfahrens vorzuschlagen, welche auch eine ausgeprägte Lern- und Erziehungsfunktion für Kinder und Jugendliche aufweisen.

### Offenbarung der Erfindung

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden die Ziele der Erfindung dadurch gelöst, dass in einem Verfahren zur berührungslosen Gewichtsermittlung, in welchem das Gewicht eines ersten Körpers im Verhältnis zum Gewicht eines zweiten Körpers ermittelt wird, der erste Körper auf einen ersten Startpunkt aufgestellt wird, der erste Körper ausgehend vom ersten Startpunkt in Bewegung gesetzt und auf einem ersten Beschleunigungspfad beschleunigt wird, wobei mindestens ein Teil der potentiellen Energie des ersten Körpers in kinetische Energie umgewandelt wird, und die Bewegung des ersten Körpers durch eine Wechselwirkung mit einem Wechselwirkungskörper in einem Aktionsbereich beeinflusst wird, wobei das Gewicht des ersten Körpers im Verhältnis zum Gewicht des zweiten Körpers aufgrund der Bewegung des ersten Körpers nach der Wechselwirkung mit dem Wechselwirkungskörper ermittelt wird. Der Vorteil dieser Erfindung liegt unter anderem darin, dass grundlegende und sehr verständliche physikalische Gesetze zur Ermittlung des Gewichts eines Körpers im Verhältnis zum anderen Körper auf eine berührungslose Art und Weise verwendet werden können. Ausserdem erlaubt diese Erfindung stets eine variable bzw. unterschiedliche Durchführung des Verfahrens, so dass dabei keine Monotonie und mangelnde Motivation entstehen können. Dadurch kann auch die Fehlerquote wesentlich reduziert werden. Des Weiteren hat diese Erfindung auch einen hohen Erziehungs- und Lernwert bei Kindern und Jugendlichen, welchen die bisher bekannten Methoden zur Ermittlung des Gewichts eines Körpers im Verhältnis zum anderen Körper entweder gar nicht, oder nur in kleinerem Masse besitzen.

Im Verfahren zur berührungslosen Gewichtsermittlung gemäss einer Ausführungsvariante der vorliegenden Erfindung wird der zweite Körper auf einen zweiten Startpunkt aufgestellt, simultan mit dem ersten Körper der zweite Körper ausgehend vom zweiten Startpunkt in Bewegung gesetzt und auf einem zweiten Beschleunigungspfad beschleunigt, wobei mindestens ein Teil der potentiellen Energie des zweiten Körpers in kinetische Energie umgewandelt wird, und die Bewegung des ersten Körpers im Aktionsbereich durch einen Zusammenstoss mit einem zweiten Körper beeinflusst. Diese Ausführungsvariante hat insbesondere den Vorteil, dass die beim Zusammenstoss freigegebene Energie zur Ermittlung des Gewichtsverhältnisses zweier Körper verwendet werden kann. Da die beiden Körper auf dem Beschleunigungspfad beschleunigt werden, treffen sie mit einer gewissen kinetischen Energie aufeinander. Abhängig von ihrem Gewicht (bzw. Masse) werden sie nach dem Zusammenstoss verschieden stark in die Richtung entgegengesetzt zur ursprünglichen Bewegungsrichtung beschleunigt. Dank dieser Rückbeschleunigung kann dann das Gewicht eines Körpers im Verhältnis zum anderen Körper einfach ermittelt werden.

In einer anderen Ausführungsvariante werden der erste Körper und/oder der zweite Körper aus einem magnetischen Material hergestellt. Der Vorteil dieser Ausführungsvariante liegt insbesondere darin, dass die magnetischen Eigenschaften der Körper verwendet werden können, um die berührungslose Ermittlung des Gewichts eines Körpers im Verhältnis zum anderen Körper noch einfacher und präziser zu gestalten. So können diese magnetischen Eigenschaften beispielsweise zur besseren Beschleunigung auf den Beschleunigungspfaden verwendet werden. Aus den magnetischen Eigenschaften der Körper ergeben sich aber auch viele weitere Vorteile.

Im Verfahren zur berührungslosen Gewichtsermittlung gemäss einer weiteren Ausführungsvariante der vorliegenden Erfindung wird die Bewegung des ersten Körpers im Aktionsbereich durch eine Wechselwirkung zwischen dem ersten Körper und einer Magnetbrücke beeinflusst. Diese Ausführungsvariante hat unter anderem den Vorteil, dass die oben genannten magnetischen Eigenschaften der Körper auch direkt zur Ermittlung des Gewichts eines Körpers im Verhältnis zum anderen Körper verwendet werden können. So werden je nach Ausrichtung der Magnetpole die Körper durch den Einfluss der Magnetbrücke entweder noch weiter beschleunigt, oder aber abgebremst. Abhängig vom Gewicht des Körpers kann diese Abbremsung beispielsweise so signifikant sein, dass der Körper all seine kinetische Energie verliert. Bei anderen Gewichten ist dieser Verlust der kinetischen Energie jedoch niemals vollständig, so dass aus der Bewegung des Körpers nach seiner Wechselwirkung mit der Magnetbrücke auch sein Gewicht im Verhältnis zum anderen Körper ermittelt werden kann.

In einer anderen Ausführungsvariante werden die Gewichte des ersten Körpers und des zweiten Körpers aus einer abzählbaren Anzahl Werte gewählt. Diese Ausführungsvariante hat insbesondere den Vorteil, dass bei der Ermittlung des Gewichts eines Körpers im Verhältnis zum anderen Körper nur eine begrenzte Anzahl Möglichkeiten in Frage kommen kann. Im Extremfall kann es sich bei den Gewichten der Körper um lediglich zwei verschiedene Werte handeln. In diesem Fall kann das Gewicht des Körpers im Verhältnis zu einem anderen Körper nach lediglich einer Durchführung des Verfahrens absolut bestimmt werden.

In einer weiteren Ausführungsvariante der vorliegenden Erfindung werden der erste Körper auf dem ersten Startpunkt und/oder der zweite Körper auf dem zweiten Startpunkt mittels eines Magneten gehalten. Der Vorteil dieser Ausführungsvariante liegt insbesondere darin, dass die Körper vor dem Anfang der Durchführung des Verfahrens auf eine sehr zuverlässige, sichere und präzise Weise an den jeweiligen Startpunkten aufgestellt werden können. Nicht nur kann dadurch die Durchführung des Verfahrens vereinfacht, sondern auch die Genauigkeit der Resultate wesentlich vergrössert werden. Zudem erlaubt diese Ausführungsvariante, dass die ganze Vorrichtung zur Durchführung des Verfahrens transportiert werden kann, ohne dass die Körper beispielsweise durch Unaufmerksamkeit verloren gehen.

In einer anderen Ausführungsvariante werden der erste Körper nach der Wechselwirkung mit dem Wechselwirkungskörper durch einen Magneten in einem ersten Anhaltepunkt, und/oder der zweite Körper durch einen Magneten in einem zweiten Anhaltepunkt angehalten. Diese Ausführungsvariante hat unter anderem den Vorteil, dass die Körper nach der Durchführung des Verfahrens stets in einem und demselben Anhaltepunkt zur Ruhe kommen. So kann das Verfahren weiter beschleunigt und vereinfacht werden. Dadurch kann die Ermittlung des Gewichts eines Körpers im Verhältnis zum anderen Körper gemäss der Erfindung noch weiter verbessert werden.

In einer wieder anderen Ausführungsvariante der vorliegenden Erfindung werden der erste Körper aus dem ersten Startpunkt und der zweite Körper aus dem zweiten Startpunkt mittels einer Starteinrichtung simultan in Bewegung gesetzt. Diese Ausführungsvariante hat unter anderem den Vorteil, dass das Verfahren weiter vereinfacht und seine Genauigkeit weiter verbessert werden können. Die vorgeschlagene Starteinrichtung macht es möglich, die Körper auf eine absolut simultane Art und Weise in Bewegung zu setzen, wodurch keine Verzögerungen und keine Verfälschungen der Resultate entstehen können. Auch kann die Ermittlung des Gewichts eines Körpers im Verhältnis zum anderen Körper bei dieser Ausführungsvariante durch nur eine einzige Person wesentlich schneller und einfacher durchgeführt werden.

Im Verfahren gemäss einer weiteren Ausführungsvariante der vorliegenden Erfindung wird der Aktionsbereich verstellt. Der Vorteil dieser Ausführungsvariante liegt insbesondere darin, dass der Aktionsbereich immer so angepasst werden kann, dass die Ermittlung des Gewichts eines Körpers im Verhältnis zum anderen Körper optimal durchgeführt werden kann. Dadurch kann beispielsweise auch bei verschiedenartigsten Körpern stets eine optimale Beschleunigung gewährleistet werden. Auch kann die Durchführung des Verfahrens optimiert werden, indem beispielsweise verschiedene Körper auf den jeweiligen Startpunkten aufgestellt und deren Gewicht nacheinander bestimmt werden können.

An dieser Stelle soll festgehalten werden, dass sich die vorliegende Erfindung neben dem erfindungsgemässen Verfahren auch auf eine entsprechende Vorrichtung zur Durchführung des erfindungsgemässen Verfahrens bezieht.

Insbesondere befinden sich gemäss einer Ausführungsvariante der vorliegenden Erfindung der erste Anhaltepunkt im ersten Beschleunigungspfad und/oder der zweite Anhaltepunkt im zweiten Beschleunigungspfad. Der Vorteil dieser Ausführungsvariante liegt insbesondere darin, dass sich beispielsweise die nach dem Zusammenstoss zwischen dem ersten Körper und dem zweiten Körper zurückgestossenen Körper wieder auf dem Beschleunigungspfad gegen den jeweiligen Startpunkt bewegen können und auf diesem Pfad vom jeweiligen Anhaltepunkt angehalten werden. So kann einerseits das Resultat der Ermittlung des Gewichtsverhältnisses viel besser und genauer abgelesen werden, und andererseits können die Startpunkte inzwischen für eine weitere Durchführung des Verfahrens frei gehalten werden.

In einer weiteren Ausführungsvariante der vorliegenden Erfindung ist der Querschnitt des ersten Beschleunigungspfads und/oder des zweiten Beschleunigungspfads eine kurvenförmige Bahn. Die zugrunde liegende Kurve kann in diesem Fall beispielsweise eine parabolische oder hyperbolische oder jede andere geeignete gekrümmte Linie sein. Diese Ausführungsvariante hat insbesondere den Vorteil, dass die Beschleunigung der Körper auf eine optimale Art und Weise durchgeführt werden kann.

### Kurze Beschreibung der Zeichnungen

Nachfolgend werden die Ausführungsvarianten der vorliegenden Erfindung anhand von Beispielen beschrieben. Die Beispiele der Ausführungen werden durch folgende beigelegte Figuren illustriert:
Figur 1 zeigt eine perspektivische schematische Darstellung einer Vorrichtung zur berührungslosen Gewichtsermittlung gemäss einer Ausführungsvariante der vorliegenden Erfindung.
Figur 2 zeigt eine ebene Seitenansicht der Vorrichtung zur berührungslosen Gewichtsermittlung gemäss einer Ausführungsvariante der vorliegenden Erfindung aus Figur 1.
Figur 3 zeigt eine perspektivische schematische Darstellung einer Vorrichtung zur berührungslosen Gewichtsermittlung gemäss einer anderen Ausführungsvariante der vorliegenden Erfindung.
Figuren 4a, 4b und 4c zeigen schematisch den Ablauf des Verfahrens zur berührungslosen Gewichtsermittlung gemäss einer Ausführungsvariante der vorliegenden Erfindung.
Figur 5 zeigt eine perspektivische schematische Darstellung einer Vorrichtung zur berührungslosen Gewichtsermittlung gemäss einer weiteren Ausführungsvariante der vorliegenden Erfindung.
Figuren 6a, 6b und 6c zeigen schematisch den Ablauf des Verfahrens zur berührungslosen Gewichtsermittlung gemäss einer weiteren Ausführungsvariante der vorliegenden Erfindung.

### Ausführungsvarianten der Erfindung

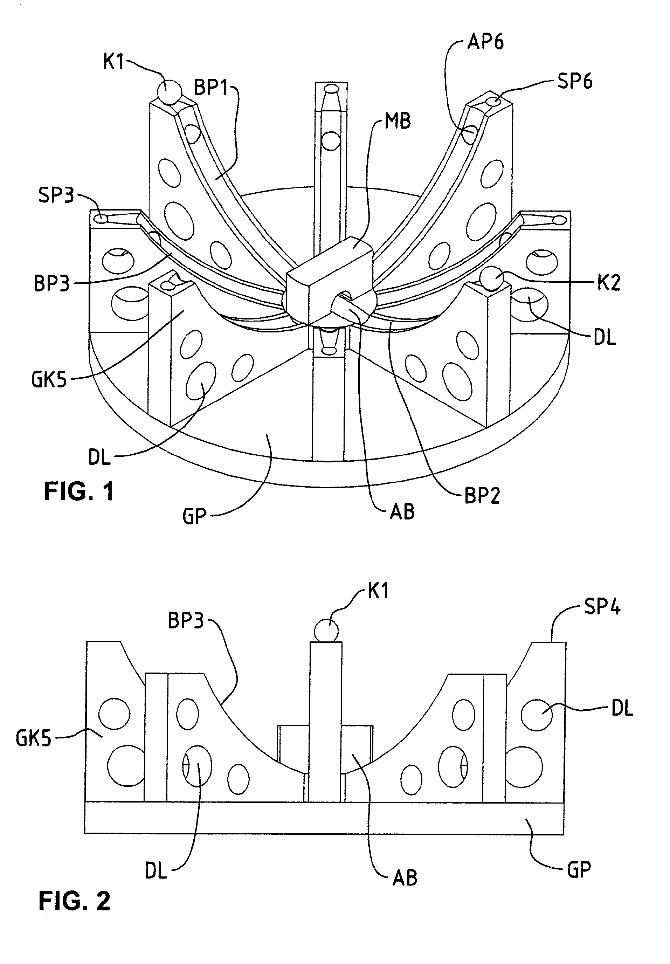

Figur 1 illustriert eine Vorrichtung zur berührungslosen Gewichtsermittlung gemäss einer ersten Ausführungsvariante der vorliegenden Erfindung. In Figur 1 bezeichnet das Bezugszeichen GP eine Grundplatte, bzw. ein Gestell. In der Ausführungsvariante in Figur 1 hat die Grundplatte GP im Wesentlichen eine runde Form. Es ist jedoch für einen Fachmann nahe liegend, dass die Grundplatte GP auch andere Formen aufweisen kann, ohne dass die Erfindung dadurch wesentlich verändert wäre. Auch ist eine Vorrichtung zur berührungslosen Gewichtsermittlung denkbar, bei welcher gar keine Grundplatte GP vorgesehen ist.

Auf der Grundplatte GP sind in der Ausführungsvariante in Figur 1 mehrere Grundkonstruktionen GK (GK1, GK2, ..., GK8) aufgestellt. Jede der Grundkonstruktionen GK (zum Beispiel die Grundkonstruktion GK1) umfasst jeweils einen Startpunkt SP (SP1, SP2, ..., SP8) und einen Beschleunigungspfad BP (BP1, BP2, ..., BP8). In Übereinstimmung mit dem erfindungsgemässen Verfahren wird zunächst ein erster Körper K1, dessen Gewicht im Verhältnis zum Gewicht des anderen Körpers K2 bestimmt werden soll, auf den ersten Startpunkt SP1 aufgestellt. Anschliessend wird der erste Körper K1 ausgehend von diesem ersten Startpunkt SP1 in Bewegung gesetzt und auf dem entsprechenden Beschleunigungspfad BP1 beschleunigt, so dass mindestens ein Teil seiner potentiellen Energie in kinetische Energie umgewandelt wird. Es sind insbesondere kugelförmige Körper K1, K2, ..., K8 für die Durchführung des erfindungsgemässen Verfahrens geeignet. Jedoch kann das Verfahren auch mit anderen Typen von Körpern, beispielsweise zylinder- oder eiförmigen Körpern durchgeführt werden.

In der Ausführungsvariante in Figur 1 sind die Beschleunigungspfade BP als Bahnen mit einem kurvenförmigen Querschnitt aufgebaut. Bei diesem Querschnitt kann es sich beispielsweise um eine parabolische oder aber um eine hyperbolische Bahn handeln. Es ist aber auch vorstellbar, dass zumindest ein Beschleunigungspfad BP als eine simple schiefe Ebene realisiert wird. Ausserdem sind auch viele andere Bahnquerschnitte denkbar, welche ähnliche Eigenschaften aufweisen. Darüber hinaus können die Beschleunigungspfade BP im Querschnitt in einer Ebene, welche zur Bewegungsrichtung des Körpers K1, K2, ..., K8 auf dem Beschleunigungspfad BP senkrecht steht, beispielsweise auch eine im Wesentlichen U-förmige Form aufweisen. Diese besondere Form des Beschleunigungspfades BP, welche teilweise an eine Bob- oder Schlittenbahn erinnert, gewährleistet eine optimale Beschleunigung, ohne Gefahr, dass der zu beschleunigende Körper K1, K2, ..., K2 von der optimalen Beschleunigungslinie abweicht. Auch kann dank dieser besonderen U-Form der Bahn verhindert werden, dass der Körper K1, K2, ..., K8 während der Beschleunigung oder nach der Wechselwirkung im Aktionsbereich AB, vom Beschleunigungspfad abkommt. Es ist selbstverständlich auch denkbar, die Wandungen bzw. den Boden des Beschleunigungspfads BP aus einem besonders "rutschigen" Material herzustellen, oder sie mit diesem besonderen Material zu verkleiden. Schliesslich ist es auch durchaus denkbar, zu einer optimalen Beschleunigung ein besonderes Schmiermittel zu verwenden.

Der Startpunkt SP kann insbesondere auch einen oder mehrere Magneten enthalten. Magnete im Startpunkt SP können dazu dienen, den Start des erfindungsgemässen Verfahrens genauer definieren zu können, da die Startposition der Körper K1, K2, ..., K8 genau bestimmt werden können. Selbstverständlich können die Magneten ihre Wirkung erst vollkommen zur Geltung bringen, wenn die entsprechenden Körper K1, K2, ..., K8 aus einem magnetischen Material hergestellt sind. Ausserdem können die Körper K1, K2, ..., K8 beim Transport der Vorrichtung durch den Magneten im jeweiligen Startpunkt SP1, SP2, ..., SP8 sicher gehalten werden. Es sind aber selbstverständlich auch solche Ausführungsvarianten möglich, bei welchen der Startpunkt SP nicht durch einen Magneten ergänzt wird, sondern lediglich eine kleinere oder grössere Aushöhlung (beispielsweise entsprechend der Grösse und/oder der Form des Körpers K1, K2, ..., K8) oder gar nur eine simple Markierung zur Anzeige des Startpunkts aufweist.

In Figur 1 weisen die Grundkonstruktionen GK ein oder mehrere Dekorationslöcher DL auf. Diese Dekorationslöcher DL weisen in Figur 1 einen kreisförmigen Querschnitt auf, können jedoch einen beliebigen Querschnitt haben, ohne dass dadurch vom ursprünglichen Erfindungsgedanken abgewichen wäre. Die Dekorationslöcher DL dienen hauptsächlich der Dekoration. Jedoch kann durch eine erhöhte Anzahl von Dekorationslöchern DL auch eine Einsparung beim Herstellungsmaterial der Grundkonstruktionen GK erreicht werden. Auch können diese Dekorationslöcher DL grundsätzlich beispielsweise mit einer durchsichtigen Masse gefüllt werden, oder durch andere beliebige Elemente ergänzt werden. Da die einzelnen Grundkonstruktionen GK im Allgemeinen von der Grundplatte GP nach Bedarf entfernt und darauf wieder platziert werden können, können die Dekorationslöcher DL, falls sie tatsächlich als Löcher realisiert und nicht mit irgendeiner Masse oder ähnlich gestopft werden, zu einem besseren und einfacheren Eingriff verwendet werden.

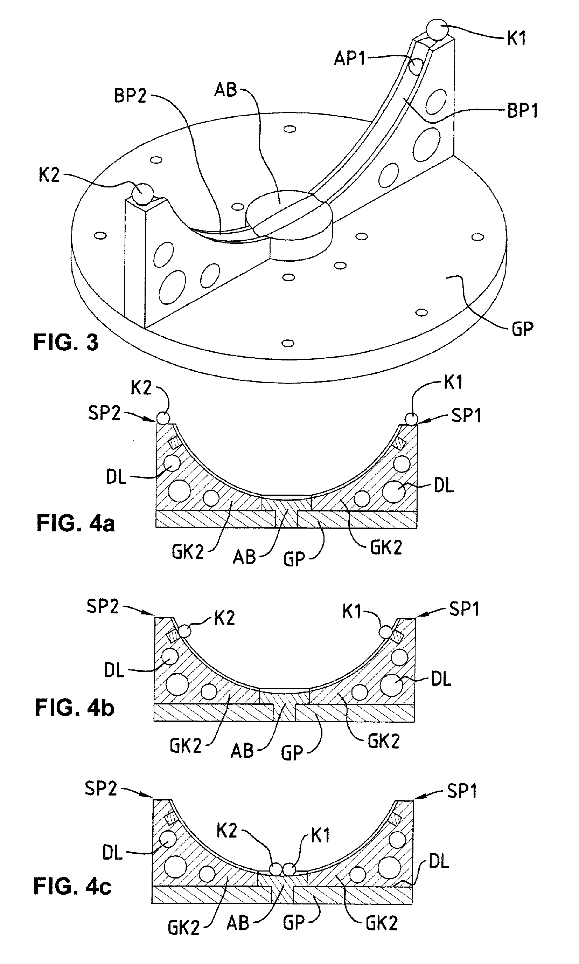

In der Mitte der Grundplatte GP, grundsätzlich genau zwischen den einzelnen Grundkonstruktionen GK, ist ein Aktionsbereich AB vorgesehen. In diesem Aktionsbereich AB kann sich insbesondere eine Magnetbrücke MB befinden. Nach dem erfindungsgemässen Verfahren wird die Bewegung des ersten Körpers K1 in diesem Aktionsbereich AB auf eine bestimmte Art und Wiese derart beeinflusst, dass das Gewicht des ersten Körpers K1 im Verhältnis zum Gewicht des zweiten Körpers K2 aufgrund der anschliessenden Bewegung des ersten Körpers K1 ermittelt werden kann. Dies wird weiter unten, mit Bezug auf die Figuren 3 bis 6, detailliert erklärt.

Ausserdem umfasst jede Grundkonstruktion GK in der Ausführungsvariante in Figur 1 einen Anhaltepunkt AP. So befindet sich der sechste Anhaltepunkt AP6 der sechsten Grundkonstruktion GK6 beispielsweise im Beschleunigungspfad BP6. Wie bereits bei den Startpunkten SP1, SP2, ..., SP8 angetönt, können die Anhaltepunkte AP jeweils einen Magneten umfassen. Ähnlich wie bei den Startpunkten SP können diese Magneten der Anhaltepunkte AP so verwendet werden, dass die aus magnetischem Material hergestellten Köper K1, K2, ..., K8 im Anhaltepunkt AP angehalten werden. So können die Körper K1, K2, ..., K3 beispielsweise nach einem Zusammenstoss im Aktionsbereich AB wieder aufgefangen werden und müssen nicht von Hand in die entsprechende Position zurück gebracht werden.

Figur 2 zeigt die Vorrichtung zur berührungslosen Gewichtsermittlung gemäss der Ausführungsvariante der vorliegenden Erfindung aus Figur 1 in der Seitenansicht. Dieselben Elemente werden mit denselben Bezugszeichen versehen. So bezieht sich das Bezugszeichen GP in Figur 1 erneut auf die Grundplatte, das Bezugszeichen K1 auf den ersten Körper, das Bezugszeichen BP3 auf den dritten Beschleunigungspfad, das Bezugszeichen GK5 auf die fünfte Grundkonstruktion mit den Dekorationslöchern DL und das Bezugszeichen SP4 auf den vierten Startpunkt. Schliesslich bezieht sich das Bezugszeichen AB in Figur 2 erneut auf den Aktionsbereich. In Figur 2 ist beispielsweise klar ersichtlich, dass die einzelnen Grundkonstruktionen GK nicht identisch sein müssen. Insbesondere kann die Höhe der einzelnen Grundkonstruktionen GK variieren. Zudem kann auch die Länge, die Art oder der Querschnitt des jeweiligen Beschleunigungspfads BP ebenfalls variieren. Die einzelnen Grundkonstruktionen GK1, GK2, ..., GK8 können ebenfalls entfernt und/oder beliebig kombiniert werden. Durch diesen modularen Aufbau der erfindungsgemässen Vorrichtung kann gewährleistet werden, dass stets die optimal an die gegebenen Körper K1, K2, ..., K8 angepasste Konfiguration eingesetzt wird.

Figur 3 illustriert eine Vorrichtung zur berührungslosen Gewichtsermittlung gemäss einer anderen Ausführungsvariante der vorliegenden Erfindung. Erneut werden dieselben Elemente durch dieselben Bezugszeichen erläutert. Das Bezugszeichen GP in Figur 3 bezieht sich erneut auf die Grundplatte, das Bezugszeichen K1 auf den ersten Körper, das Bezugszeichen K2 auf den zweiten Körper, das Bezugszeichen BP1 auf den ersten Beschleunigungspfad, das Bezugszeichen BP2 auf den zweiten Beschleunigungspfad und das Bezugszeichen AB auf den Aktionsbereich.

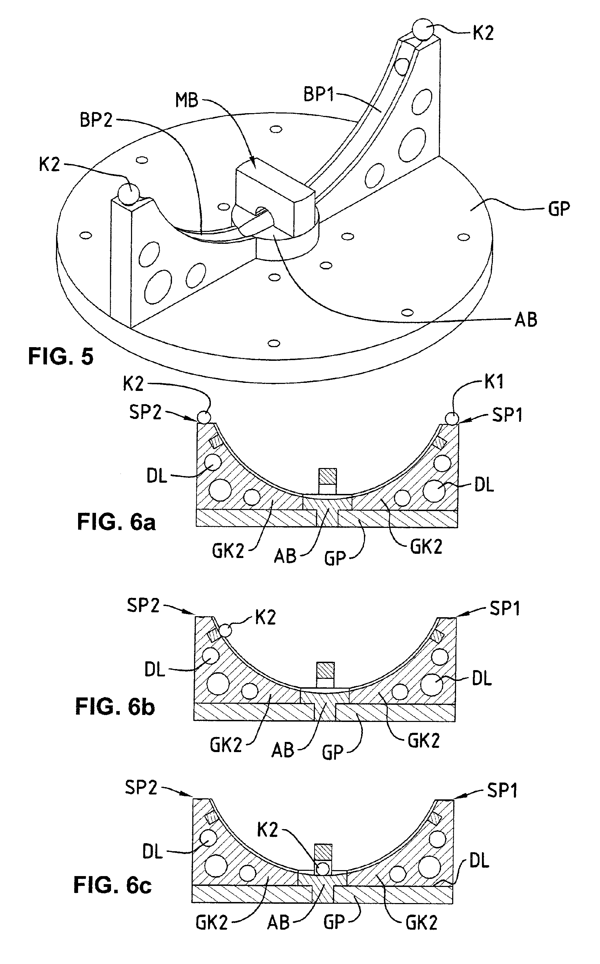

In Figur 3 enthält die Vorrichtung zur berührungslosen Gewichtsermittlung lediglich zwei Grundkonstruktionen GK. In diesem Fall sind die übrigen Grundkonstruktionen von der Grundplatte GP entfernt worden. In diesem Fall kann also das Gewicht des ersten Körpers K1 beispielsweise im Verhältnis zum zweiten Körper K2 ermittelt werden. Die einzelnen Etappen des entsprechenden Verfahrens werden in Figuren 4a, 4b und 4c dargestellt. Dazu wird der erste Körper K1 auf den ersten Startpunkt SP1 (unter dem Körper K1) aufgestellt, während der zweite Körper K2 auf den zweiten Startpunkt SP2 aufgestellt wird (Figur 4a). Anschliessend wird der erste Körper K1 ausgehend vom ersten Startpunkt SP1 in Bewegung gesetzt und auf dem ersten Beschleunigungspfad BP1 zur Beschleunigung gebracht, wobei mindestens ein Teil seiner potentiellen Energie in kinetische Energie umgewandelt wird. Simultan mit dem ersten Körper K1 wird auch der zweite Körper K2 ausgehend vom zweiten Startpunkt SP2 in Bewegung gesetzt und auf dem zweiten Beschleunigungspfad BP2 beschleunigt, wobei ebenfalls mindestens ein Teil der potentiellen Energie des zweiten Körpers K2 in kinetische Energie umgewandelt wird (Figur 4b). In dieser Etappe passieren die beiden Körper K1 und K2 die jeweiligen Anhaltepunkte AP1 und AP2 in den Beschleunigungspfaden BP1 und BP2. Allerdings werden die beiden Körper K1 und K2 in den Anhaltepunkten AP1 und AP2 nicht angehalten, da sie bereits über eine genügend hohe kinetische Energie verfügen, sondern lediglich etwas gebremst. Da die beiden Körper K1 und K2 simultan in Bewegung gesetzt werden, und da die beiden Beschleunigungspfade BP1 und BP2 grundsätzlich identisch sind, kommen die beiden Körper K1 und K2 gleichzeitig im Aktionsbereich AB an (Figur 6c).

In der Ausführungsform in den Figuren 3 und 4 umfasst der Aktionsbereich AB einen drehbaren und austauschbaren Teil, welcher einen ähnlichen U-förmigen Querschnitt aufweist, wie dies bei den Querschnitten der Beschleunigungspfade BP1 und BP2 der Fall ist. Dieser Teil wird so aufgestellt, dass die beiden Beschleunigungspfade BP1 und BP2 grundsätzlich über diesen Teil ineinander gehen, so dass zwischen dem ersten Startpunkt SP1 und dem zweiten Startpunkt SP2 eine ununterbrochene Bahn entsteht. Dadurch, dass die beiden Beschleunigungspfade BP1 und BP2 identisch sind, ist diese Bahn im Bezug auf den untersten Punkt im Aktionsbereich AB punktesymmetrisch. So kommt es in der Ausführungsform der Erfindung, welche in den Figuren 3 und 4 dargestellt ist, zu einem Zusammenstoss zwischen dem ersten Körper K1 und dem zweiten Körper K2 im Aktionsbereich AB. Nach dem Zusammenstoss werden nach den Gesetzen der Physik die jeweiligen kinetischen Energien der beiden Körper K1 und K2 teilweise in Deformationsenergie umgewandelt. Ein anderer Teil der kinetischen Energie wird jedoch beibehalten, wobei die beiden Körper anschliessend in die entgegengesetzte Richtung zurückgestossen werden.

Falls das Gewicht des Körpers K1 mit dem Gewicht des Körpers K2 identisch ist, werden beide Körper mit der gleichen kinetischen Energie nach hinten zurückgestossen. Selbstverständlich kann es aufgrund verschiedenster Einflüsse (Reibung, Luftwiderstand und andere Umwelteinflüsse) dazu kommen, dass sich die kinetischen Energien der beiden Körper K1 und K2 zu diesem Zeitpunkt leicht unterscheiden. Dieser Unterschied soll unter den normalen Bedingungen jedoch grundsätzlich nicht so gross sein, um die Durchführung des erfindungsgemässen Verfahrens zu verunmöglichen. Falls die kinetischen Energien der beiden Körper K1 und K2 nach dem Zusammenstoss genügend gross sind, werden diese beiden Körper K1 und K2 so weit nach hinten zurückgestossen, dass sie anschliessend die jeweiligen Anhaltepunkte AP1 und AP2 erreichen, wo sie von den darin integrierten Magneten aufgefangen und angehalten werden. Wenn die kinetischen Energien aber nicht genügend gross sind, kommen die beiden Körper K1 und K2 (nach eventuell mehrmaligem Hin- und Herpendeln) im untersten Punkt des Aktionsbereichs AB zum Stillstand. In diesen beiden Fällen kann leicht nachvollzogen werden, dass die Gewichte der beiden Körper K1 und K2 gleich gross sind.

Eine andere Situation entsteht, wenn das Gewicht eines Körpers (beispielsweise das Gewicht des ersten Körpers K1) grösser ist als das Gewicht des anderen Körpers (beispielsweise des zweiten Körpers K2). In diesem Fall sind die kinetischen Energien der beiden Körper K1 und K2 im untersten Punkt des Aktionsbereichs AB nicht identisch. Nach dem Zusammenstoss wird also der leichtere Körper (in unserem Beispiel der zweite Körper K2) mit einer höheren kinetischen Energie nach hinten zurückgestossen, als der schwerere der beiden Körper (in unserem Beispiel der erste Körper K1). Bei genügend hoher kinetischer Energie wird der leichtere zweite Körper K2 anschliessend vom entsprechenden Anhaltepunkt AP2 aufgefangen und angehalten, während der schwerere erste Körper K1 im untersten Punkt des Aktionsbereichs AB zur Ruhe kommt. In diesem Fall kann leicht ermittelt werden, dass das Gewicht des ersten Körpers K1 im Verhältnis zum Gewicht des zweiten Körpers K2 grösser sein muss. Analoge Überlegungen gelten für den Fall, in welchem der erste Körper K1 leichter ist als der zweite Körper K2. In diesem Fall bleibt der schwerere Körper K2 im untersten Punkt des Aktionsbereichs AB stehen, während der leichtere erste Körper K1 vom ersten Anhaltepunkt AP1 angehalten wird.

Figur 5 illustriert eine Vorrichtung zur berührungslosen Gewichtsermittlung gemäss einer wieder anderen Ausführungsvariante der vorliegenden Erfindung. Wie schon zuvor, dieselben Elemente werden mit denselben Bezugszeichen versehen. So bezieht sich das Bezugszeichen GP in Figur 5 wieder auf die Grundplatte, die Bezugszeichen K1 und K2 auf den ersten und auf den zweiten Körper, das Bezugszeichen BP1 auf den ersten Beschleunigungspfad, das Bezugszeichen BP2 auf den zweiten Beschleunigungspfad und das Bezugszeichen AB auf den Aktionsbereich. Auch die Vorrichtung In Figur 3 enthält lediglich zwei Grundkonstruktionen GK. In diesem Fall sind die übrigen Grundkonstruktionen von der Grundplatte GP entfernt worden. Die einzelnen Etappen des Verfahrens gemäss dieser Ausführungsvariante der Erfindung werden in Figuren 6a, 6b und 6c dargestellt. Im Verfahren gemäss dieser Ausführungsvariante der Erfindung wird nur der erste Körper K1 auf den ersten Startpunkt SP1 aufgestellt (Figur 6a) und dann ausgehend vom ersten Startpunkt SP1 in Bewegung gesetzt. Auf dem ersten Beschleunigungspfad BP1 wird der erste Körper K1 dann zur Beschleunigung gebracht, so dass mindestens ein Teil seiner potentiellen Energie in kinetische Energie umgewandelt wird (Figur 4b).

Der Aktionsbereich AB in dieser Ausführungsvariante der Erfindung enthält neben dem U-förmigen entfernbaren und austauschbaren Teil, welcher die Beschleunigungspfade BP1 und BP2 zu einer kontinuierlichen Bahn macht, auch eine entfernbare Magnetbrücke MB. Diese Magnetbrücke MB wird im Aktionsbereich AB so aufgestellt, dass eine Art Tunnel entsteht, mit einer Öffnung, welche gross genug ist, dass die jeweiligen Körper K1, K2, ..., K8 diesen Tunnel ungehindert passieren können. Wenn der auf dem Beschleunigungspfad BP1 beschleunigte erste Körper K1 im untersten Punkt der Bahn angekommen ist, tritt er in eine Wechselwirkung mit der Magnetbrücke MB. Offensichtlich ist es in diesem Fall nötig, dass der erste Körper K1 aus einem magnetischen Material hergestellt wird, so dass die Magneteigenschaften maximal ausgenutzt werden können. In diesem Fall entsteht zwischen der Magnetbrücke MB und dem ersten Körper K1 bei günstiger Polarisation eine Anziehungskraft, welche sich der Bewegung des ersten Körpers K1 widersetzt. Dieser Widerstand führt dazu, dass die kinetische Energie des ersten Körpers K1 nach der Wechselwirkung mit der Magnetbrücke um einen bestimmten Betrag vermindert wird.

Falls das Gewicht des ersten Körpers K1 gross genug ist, so wird diese Verminderung der kinetischen Energie jedoch nicht ausreichen, um den ersten Körper K1 vollständig zum Stillstand zu bringen. In diesem Fall wird der erste Körper K1 seine Bewegung in derselben Richtung fortsetzen, jedoch mit einer etwas kleineren kinetischen Energie. Also wird der erste Körper K1 anschliessend auf dem Beschleunigungspfad BP2 eine negative Beschleunigung erfahren, bis er vollständig zum Stillstand kommt. Jedoch wird der erste Körper K1 bei genügend hoher kinetischer Energie nach der Wechselwirkung mit der Magnetbrücke MB vom Anhaltepunkt AP2 im zweiten Beschleunigungspfad BP2 angehalten. In diesem Fall kann leicht nachvollzogen werden, dass das Gewicht des ersten Körpers K1 relativ gross sein muss. Anders verhält sich der erste Körper K1 allerdings, wenn sein Gewicht klein ist. In diesem Fall reicht die Anziehungskraft der Magnetbrücke MB, um die kinetische Energie des ersten Körpers K1 vollständig zu eliminieren. In diesem Fall bewegt sich der erste Körper K1 nach der Wechselwirkung mit der Magnetbrücke MB nicht mehr und bleibt im untersten Punkt des Aktionsbereichs AB stehen. Es ist demzufolge nachvollziehbar, dass in diesem Fall leicht ermittelt werden kann, dass das Gewicht des ersten Körpers K1 relativ klein sein muss.

Das erfindungsgemässe Verfahren und die erfindungsgemässe Vorrichtung haben, wie bereits angetönt, auch einen hohen Lern- und Erziehungswert. Beispielsweise kann den Kindern der Begriff des Gewichts mittels der erfindungsgemässen Vorrichtung durch eine Art Spiel beigebracht werden. In diesem Fall können beispielsweise Körper K1, K2, ..., K8 mit lediglich zwei verschiedenen Gewichten (schwer und leicht) gewählt werden, wobei jeder der Spieler zwei Körper zur Verfügung hätte, welche sich äusserlich keinesfalls voneinander unterscheiden lassen (d.h. sie haben die gleiche Grösse, Form, Farbe, etc.). Das Spiel bestünde darin, dass der erste Spieler einen der beiden Körper (den schweren oder den leichten) auswählen und auf den ersten Startpunkt SP1 aufstellen würde. Der andere Spieler müsste dann versuchen rauszufinden, welchen der beiden Körper sein Gegenspieler gewählt hat. Also würde der zweite Spieler ebenfalls einen der beiden ihm zur Verfügung stehenden Körper wählen und auf den zweiten Startpunkt SP2 aufstellen. Anschliessend würde man das erfindungsgemässe Verfahren laufen lassen, um am Schluss das Gewicht des ersten Körpers K1 im Verhältnis zum zweiten Körper K2 zu ermitteln. Die beiden Spieler könnten beispielsweise vor der Durchführung des Verfahrens eine Wette abschliessen, um danach entsprechend dem Ergebnis des Verfahrens Punkte oder ähnliches zu verteilen. Es ist aber auch die Variante möglich, in welcher jeweils der Gewinner der Runde derjenige Spieler wäre, dessen Körper im untersten Punkt des Aktionsbereichs AB zum Stillstand käme. So ergäben sich beispielsweise folgende Spielsituationen:

| Spieler 1 wählt | Spieler 2 wählt | Ergebnis | Gewinner ist |
|---|---|---|---|
| schweren Körper | schweren Körper | beide Körper bleiben im untersten Punkt stehen oder kehren zu den Anhaltepunkten zurück | niemand/ unentschieden |
| leichten Körper | leichten Körper | | |
| schweren Körper | leichten Körper | der schwere Körper bleibt im untersten Punkt, der leichte Körper kehrt zum Anhaltepunkt zurück | Spieler 2 |
| leichten Körper | schweren Körper | Der schwere Körper bleibt im untersten Punkt, der leichte Körper kehrt zum Anhaltepunkt zurück | Spieler 1 |
| schweren Körper | Magnetbrücke | der schwere Körper wird erst vom gegenüberliegenden Anhaltepunkt angehalten | Spieler 1 |
| leichten Körper | Magnetbrücke | der leichte Körper wird von der Magnetbrücke im untersten Punkt angehalten | Spieler 2 |

Selbstverständlich gibt es weitere Möglichkeiten und Regeln, nach welchen das erfindungsgemässe Verfahren zu einem Spiel kombiniert werden kann, so dass insbesondere Kindern und Jugendlichen der Begriff des Gewichts und des Gewichtsunterschieds näher gebracht werden kann.

Die Erfindung ist nicht auf die beschriebenen Ausführungsvarianten beschränkt. Dem Fachmann wird geradewegs klar sein, dass Weiterentwicklungen und Abänderungen im Rahmen der geschützten Erfindung ohne weiteres möglich sind. Vorrichtungselemente können je nach Bedarf durch andere Elemente ausgetauscht werden, welche die gleichen oder ähnlichen Funktionen erfüllen. Zusätzliche Einrichtungen und Elemente können ebenfalls vorgesehen werden, wie beispielsweise mechanische oder elektronische Auslöse- Mess- und/oder Anzeigeeinrichtungen. Diese und andere Massnahmen und Elemente fallen jedoch in den Schutzbereich der Erfindung, welcher durch die Patentansprüche definiert wird.

## Patentansprüche

1. Verfahren zur berührungslosen Gewichtsermittlung, in welchem das Gewicht eines ersten Körpers (K1) im Verhältnis zum Gewicht eines zweiten Körpers (K2) ermittelt wird, **dadurch gekennzeichnet,**
**dass** der erste Körper (K1) auf einen ersten Startpunkt (SP1) aufgestellt wird,
**dass** der erste Körper (K1) ausgehend vom ersten Startpunkt (SP1) in Bewegung gesetzt und auf einem ersten Beschleunigungspfad (BP1) beschleunigt wird, wobei mindestens ein Teil der potentiellen Energie des ersten Körpers (K1) in kinetische Energie umgewandelt wird, und
**dass** die Bewegung des ersten Körpers (K1) durch eine Wechselwirkung mit einem Wechselwirkungskörper (K2, MB) in einem Aktionsbereich (AB) beeinflusst wird, wobei das Gewicht des ersten Körpers (K1) im Verhältnis zum Gewicht des zweiten Körpers (K2) aufgrund der Bewegung des ersten Körpers (K1) nach der Wechselwirkung mit dem Wechselwirkungskörper (K2, MB) ermittelt wird.

2. Verfahren zur berührungslosen Gewichtsermittlung gemäss Anspruch 1, **dadurch gekennzeichnet,**
**dass** der zweite Körper (K2) auf einen zweiten Startpunkt (SP2) aufgestellt wird,
**dass**, simultan mit dem ersten Körper (K1), der zweite Körper (K2) ausgehend vom zweiten Startpunkt (SP2) in Bewegung gesetzt und auf einem zweiten Beschleunigungspfad (BP2) beschleunigt wird, wobei mindestens ein Teil der potentiellen Energie des zweiten Körpers (K2) in kinetische Energie umgewandelt wird,
**dass** die Bewegung des ersten Körpers (K1) im Aktionsbereich (AB) durch einen Zusammenstoss mit einem zweiten Körper (K2) beeinflusst wird.

3. Verfahren zur berührungslosen Gewichtsermittlung gemäss Anspruch 1 oder 2, **dadurch gekennzeichnet, dass** der erste Körper (K1) und/oder der zweite Körper (K2) aus einem magnetischen Material hergestellt werden.

4. Verfahren zur berührungslosen Gewichtsermittlung gemäss Anspruch 3, **dadurch gekennzeichnet, dass** die Bewegung des ersten Körpers (K1) im Aktionsbereich (AB) durch eine Wechselwirkung zwischen dem ersten Körper (K1) und einer Magnetbrücke (MB) beeinflusst wird.

5. Verfahren zur berührungslosen Gewichtsermittlung gemäss einem der Ansprüche 1 bis 4, **dadurch gekennzeichnet, dass** die Gewichte des ersten Körpers (K1) und des zweiten Körpers (K2) aus einer abzählbaren Anzahl Werte gewählt werden.

6. Verfahren zur berührungslosen Gewichtsermittlung gemäss einem der Ansprüche 3 bis 5, **dadurch gekennzeichnet, dass** der erste Körper (K1) auf dem ersten Startpunkt (SP1) und/oder der zweite Körper (K2) auf dem zweiten Startpunkt (SP2) mittels eines Magneten gehalten wird.

7. Verfahren zur berührungslosen Gewichtsermittlung gemäss einem der Ansprüche 3 bis 6, **dadurch gekennzeichnet, dass** der erste Körper (K1) nach der Wechselwirkung mit dem Wechselwirkungskörper (K2, MB) durch einen Magneten in einem ersten Anhaltepunkt (AP1) angehalten wird, und/oder dass der zweite Körper (K2) durch einen Magneten in einem zweiten Anhaltepunkt (AP2) angehalten wird.

8. Verfahren zur berührungslosen Gewichtsermittlung gemäss einem der Ansprüche 1 bis 7, **dadurch gekennzeichnet, dass** der erste Körper (K1) aus dem ersten Startpunkt (SP1) und der zweite Körper (K2) aus dem zweiten Startpunkt (SP2) mittels einer Starteinrichtung simultan in Bewegung gesetzt werden.

9. Verfahren zur berührungslosen Gewichtsermittlung gemäss einem der Ansprüche 1 bis 8, **dadurch gekennzeichnet, dass** der Aktionsbereich (AB) verstellt wird.

10. Vorrichtung zur berührungslosen Gewichtsermittlung, mittels welcher das Gewicht eines ersten Körpers (K1) im Verhältnis zum Gewicht eines zweiten Körpers (K2) ermittelbar ist, **gekennzeichnet durch**
einen ersten Startpunkt (SP1) zum Aufstellen des ersten Körpers (K1) und einen zweiten Startpunkt (SP2) zum Aufstellen des zweiten Körpers (K2),
einen ersten Beschleunigungspfad (BP1) zum Beschleunigen des ersten Körpers (K1) und einen zweiten Beschleunigungspfad (BP2) zum Beschleunigen des zweiten Körpers (K2), und
einen Aktionsbereich (AB), in welchem die Bewegung des ersten Körpers (K1) **durch** eine Wechselwirkung mit einem Wechselwirkungskörper (K2, MB) beeinflussbar ist, wobei das Gewicht des ersten Körpers (K1) im Verhältnis zum Gewicht des zweiten Körpers (K2) aufgrund der Bewegung des ersten Körpers (K1) nach der Wechselwirkung mit dem Wechselwirkungskörper (K2, MB) ermittelbar ist.

11. Vorrichtung zur berührungslosen Gewichtsermittlung gemäss Anspruch 10, **dadurch gekennzeichnet, dass** im Aktionsbereich (AB) der erste Beschleunigungspfad (BP1) und der zweite Beschleunigungspfad (BP2) durch eine Führung verbindbar sind, wobei ein Zusammenstoss zwischen dem ersten Körper (K1) und dem zweiten Körper (K2) realisierbar ist.

12. Vorrichtung zur berührungslosen Gewichtsermittlung gemäss Anspruch 10 oder 11, **dadurch gekennzeichnet, dass** der erste Körper (K1) und/oder der zweite Körper (K2) aus einem magnetischen Material hergestellt sind.

13. Vorrichtung zur berührungslosen Gewichtsermittlung gemäss Anspruch 12, **dadurch gekennzeichnet, dass** zur Beeinflussung der Bewegung des ersten Körpers (K1) eine Magnetbrücke (MB) im Aktionsbereich (AB) positionierbar ist.

14. Vorrichtung zur berührungslosen Gewichtsermittlung gemäss einem der Ansprüche 10 bis 13, **dadurch gekennzeichnet, dass** die Gewichte des ersten Körpers (K1) und des zweiten Körpers (K2) aus einer abzählbaren Anzahl Werte wählbar sind.

15. Vorrichtung zur berührungslosen Gewichtsermittlung gemäss einem der Ansprüche 12 bis 14, **dadurch gekennzeichnet, dass** der erste Körper (K1) auf dem ersten Startpunkt (SP1) und/oder der zweite Körper (K2) auf dem zweiten Startpunkt (SP2) mittels eines Magneten haltbar sind.

16. Vorrichtung zur berührungslosen Gewichtsermittlung gemäss einem der Ansprüche 12 bis 15, **dadurch gekennzeichnet, dass** der erste Körper (K1) nach der Wechselwirkung mit dem Wechselwirkungskörper (K2, MB) durch einen Magneten in einem ersten Anhaltepunkt (AP1) anhaltbar ist, und/oder dass der zweite Körper (K2) durch einen Magneten in einem zweiten Anhaltepunkt (AP2) anhaltbar ist.

17. Vorrichtung zur berührungslosen Gewichtsermittlung gemäss Anspruch 16, **dadurch gekennzeichnet, dass** sich der erste Anhaltepunkt (AP1) im ersten Beschleunigungspfad (BP1) und/oder der zweite Anhaltepunkt (AP2) im zweiten Beschleunigungspfad (BP2) befinden.

18. Vorrichtung zur berührungslosen Gewichtsermittlung gemäss einem der Ansprüche 10 bis 17, **dadurch gekennzeichnet, dass** die Vorrichtung eine Startreinrichtung umfasst, mittels welcher der erste Körper (K1) aus dem ersten Startpunkt (AP1) und der zweite Körper (K2) aus dem zweiten Startpunkt (SP2) simultan in Bewegung versetzbar sind.

19. Vorrichtung zur berührungslosen Gewichtsermittlung gemäss einem der Ansprüche 10 bis 18, **dadurch gekennzeichnet, dass** der Aktionsbereich (AB) verstellbar ist.

20. Vorrichtung zur berührungslosen Gewichtsermittlung gemäss einem der Ansprüche 10 bis 19, **dadurch gekennzeichnet, dass** der Querschnitt des ersten Beschleunigungspfads (BP1) und/oder des zweiten Beschleunigungspfad (BP2) eine kurvenförmige Bahn ist.
